(19) Europäisches Patentamt
European Patent Office
Office européen des brevets

(11) Veröffentlichungsnummer: **0 129 797**
**B1**

(12) # EUROPÄISCHE PATENTSCHRIFT

(45) Veröffentlichungstag der Patentschrift: **18.03.87**

(21) Anmeldenummer: **84106860.4**

(22) Anmeldetag: **15.06.84**

(51) Int. Cl.⁴: **C 09 B 67/24,** C 09 B 67/54 // C09B69/02, C09B35/46, C09B33/18, D06P3/32, C09D11/16, D21H3/80

(54) **Polyazofarbstoffe.**

(30) Priorität: **23.06.83 DE 3322502**

(43) Veröffentlichungstag der Anmeldung: **02.01.85 Patentblatt 85/1**

(45) Bekanntmachung des Hinweises auf die Patenterteilung: **18.03.87 Patentblatt 87/12**

(84) Benannte Vertragsstaaten: **CH DE FR GB IT LI**

(56) Entgegenhaltungen:
**EP-A-0 014 378**
**EP-A-0 021 619**
**FR-A-2 064 913**
**FR-A-2 132 151**
**FR-A-2 132 680**
**FR-A-2 206 359**
**FR-A-2 258 429**

(73) Patentinhaber: **BASF Aktiengesellschaft, Carl-Bosch- Strasse 38, D-6700 Ludwigshafen (DE)**

(72) Erfinder: **Hansen, Guenter, Dr., Alwin- Mittasch-Platz 8, D-6700 Ludwigshafen (DE)**
Erfinder: **Hartmann, Heinz, Melibokus Ring 18, D-6806 Viernheim (DE)**
Erfinder: **Lach, Dietrich, Dr., Gartenweg 16, D-6701 Friedelsheim (DE)**
Erfinder: **Zeidler, Georg, Mutterstadter Strasse 7, D-6701 Dannstadt- Schauernheim (DE)**

**EP 0 129 797 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft Farbstoffe der Formel

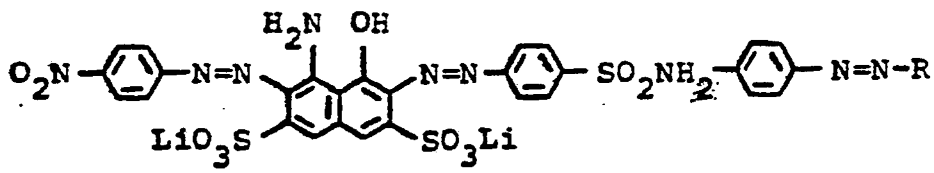

oder

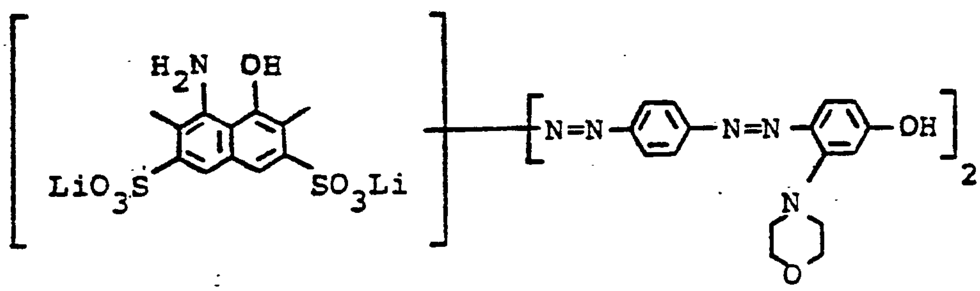 ,

wobei

R 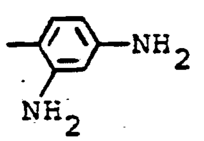 oder 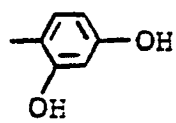 ist.

Die Erfindungsgemäßen Farbstoffe eignen sich insbesondere zur Herstellung von Flüssigeinstellungen. Diese enthalten die Farbstoffe in Konzentrationen bis zu 40 %, der Rest besteht aus Wasser. Es ist natürlich möglich, den Flüssigeinstellungen wasserlösliche Lösungsmittel hinzuzufügen, jedoch ist dies für die Löslichkeit der Farbstoffe nicht erforderlich; es kann aber zur Erhöhung der Kältestabilität, zur Verhinderung der Verdunstung oder zur Änderung der Viskosität zweckmäßig sein.

Geeignete Lösungsmittel sind beispielsweise: Ethylenglykol, Diethylenglykol, Glyzerin, Polyglykole, 1,2-Propandiol, N-Methylpyrrolidon oder Formamid.

Zur Herstellung der Flussigenstellungen kann man die Natriumsalze der Farbstoffe, die man quantitativ durch Auflösen der wie üblich durch Diazotierung und Kupplung hergestellten Farbstoffe erhält, mit einem Amin versetzen und anschließend den pH-Wert auf $< 3$ absenken. Die Farbstoffe fallen dadurch aus und werden isoliert und gewaschen, bis das Filtrat nahezu salzfrei abläuft. Anschließend wird das in Wasser suspendierte Filtergut mit Lithiumhydroxid versetzt, und das in Freiheit gesetzte Amin wird abdestilliert. Anstelle der Natriumsalze können auch die Kalium- oder gegebenenfalls substituierten Ammoniumsalze als Ausgangsmaterial verwendet werden.

Als Amine eignen sich insbesondere mit Wasser nicht mischbare Verbindungen, wie Tributylamin, Tri-n-propylamin, Triisobutylamin, Tri-2-ethyl-hexylamin, N,N-Dimethylisopropylamin, N,N-Diethylisopropylamin N,N-Dimethyl-2-ethylhexylamin, N-Isobutyldi(2-ethylhexyl)amin, N-Methyltridecylamin, Dimethylcyclohexylamin oder N,N-Dimethylbenzylamin.

Zur Absenkung des pH-Wertes nimmt man zweckmäßigerweise Mineralsäuren, vorzugsweise Schwefelsäure.

Pro Mol Farbstoff verwendet man zweckmäßigerweise 1 bis 2 Mol Amin und 2 Mol Lithiumhydroxid.

Die erfindungsgemäßen Farbstoffe ergeben echte Lösungen und eignen sich z.B. zum Färben von Leder und

Papier oder auch zur Herstellung von Tintenschreibern.

In der DE-C-22 54 835 sowie der EP-B-14 378 sind die erfindungsgemäßen Verbindungen als freie Säuren beschrieben, die jedoch eine für Flüssigeinstellungen völlig unzureichende Löslichkeit haben. Da dies auch für die Natrium- und Kaliumsalze gilt, war es sehr überraschend, daß man mit den Lithiumsalzen hochprozentige Lösungen einstellen kann.

In den folgenden Beispielen bezieher sich Angaben über Teile und Prozente, sofern nicht anders vermerkt auf das Gewicht

**Beispiel 1**

312,4 Teile des Farbstoffs der Formel

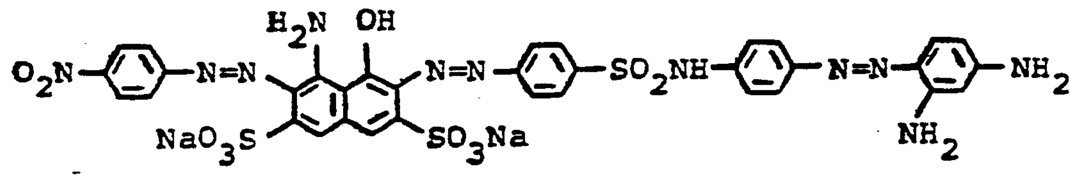

werden in 800 Teilen Wasser aufgeschlämmt und mit 50 %iger Natronlauge versetzt (ca. 4 Teile), bis der pH-Wert 9 erreicht wird. Zur klaren Lösung fügt man 20,4 Teile Tributylamin, erwärmt auf 40 °C und stellt mit 96 %iger Schwefelsäure auf pH 1,4 - 1,5 (ca. 18 Tl.). Man erhitzt auf 90 °C, fugt 88 Teile festes Kochsalz zu und leitet Dampf ein, bis zum Gesamtvolumen von 1400 ml. Daraufhin saugt man ab, wascht mit Trinkwasser, dann mit destilliertem Wasser, bis das Filtrat eine Leitfahigkeit von < 100 µS aufweist. Das von anorganiscnen Ionen freie Tributylammoniumsalz des Farbstoffe wird dann als feuchte Paste (Trockengehalt ca. 70 %) in eine Lösung aus 5,3 Teilen Lithiumhydroxid und 160 Teilen Wasser eingetragen. Das dabei freigesetzte Tributylamin wird azeotrop abdestilliert. Die aminfreie Lösung wird mit Wasser auf 312 Tl. erganzt. Es resultiert eine ca. 30 %ige stabile Lösung des Lithiumsalzes des o. g. Farbstoffs.

Werden anstelle des o. g. Farbstoffs 310 Tl. des Farbstoffs der Formel

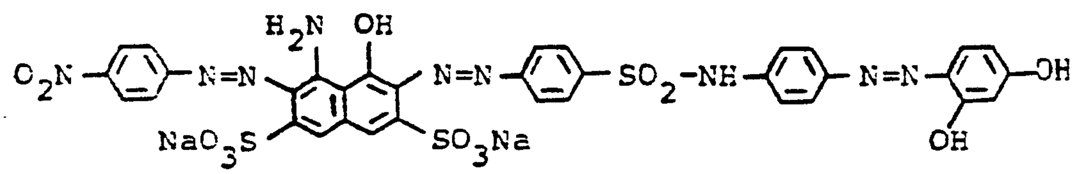

eingesetzt und wie oben beschrieben verfahren, so erhält 310 Tl. einer dunkelgrünen, stabilen, etwa 30 %igen wäßrigen Farbstofflösung.

**Beispiel 2**

97,7 Teile des Farbstoffe der Formel

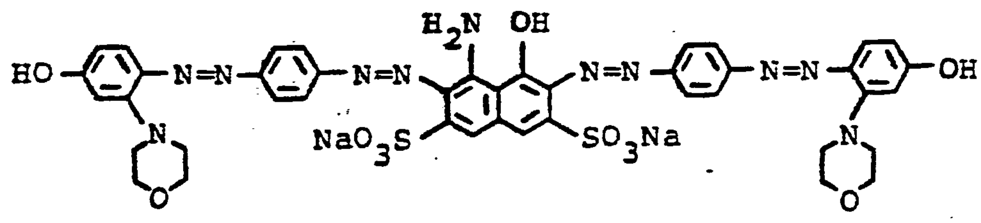

werden in Form einer ca. 40 %igen Paste in 700 Tl. Wasser aufgeschlammt und mit ca. 4 Tl. 50 %iger Natronlauge klar gelöst (pH 9). Zur Lösung fugt man 18 Tl. Triisobutylamin und stellt bei ca. 40 °C mit 96 %iger Schwefelsaure auf einen pH-Wert von 1,5 ein. Man erhitzt auf 90 °C, gibt 80 Teile Kochsalz zu und ruhrt 2 Stunden bei 90 °C nach. Das wasserunlösliche Ammoniumsalz wird heiß abgesaugt und mit Leitungswasser, später mit destilliertem Wasser, so lange gewaschen, bis die Leitfähigkeit des Waschwassers unter 100 µS liegt.

Das feuchte Filtergut wird dann in eine Lösung aus 5,2 Tl. Lithiumhydroxid und 150 Tl. Wasser eingetragen. Danach wird das in Freiheit gesetzte Triisobutylamin durch azeotrope Destillation entfernt und die schwarze, wäßrige Lösung durch Zugabe von Wasser auf ca. 30 % Farbstoffgehalt eingestellt.

**Beispiel 3**

10 Teile des gemäß Beispiel 1 hergestellten Farbstoffes, 28 Teile Diethylenglykol, 2 Teile Polyethylenglykol (Molgewicht ~400) und 60 Teile Wasser werden zu einer dünnflussigen Tinte verrührt. Diese eignet sich als wasserfeste Schreibflüssigkeit für Schreibgeräte mit metallgefaßten Kunststoffminen.

Für Kugelschreiber mit Schreibspitzen aus Metall (z. B. Stahl, Messing, Neusilberlegierungen mit Wolframcarbidkugeln) ersetzt man das Diethylenglykol durch Ethylenglykol.

**Beispiel 4**

Färbung von Chromrindleder.

Ein Lederstuck von 100 Gewichtsteilen eines auf übliche Weise chromgegerbten Rindleders der Falzstarke 1,5 mm wurde in mit 150 Teilen Wasser gefullten Wackerfässern mit 2 Teilen Natriumformiat und 0,5 Teilen Natriumbikarbonat 60 Minuten bei 30 °C gewalkt. Danach hatte die Entsäuerungsflotte einen pH-Wert von 5,2. Danach wurde das Leder mit 250 Teilen Wasser durch zehnminütiges Walken bei 50 °C gewaschen. Anschließend wurde das Leder in 250 Teilen Wasser mit 1 Teil des Farbstoffes gemäß Beispiel 1 durch dreißigminutiges Walken bei 50 °C gefarbt und danach in gleicher Flotte mit 4 Teilen eines handelsüblichen Fettungsmittels durch einstündiges Walken gefettet. Schließlich wurde mit 1 Teil Ameisensäure, die vor der Zugabe im Verhältnis von 1 : 10 mit Wasser verdünnt worden hat, abgesäuert und noch 30 Minuten gewalkt. Das gefärbte und gefettete Leder wurde noch mit kaltem Wasser gespült und anschließend ausgereckt, hängegetrocknet, gespänt, gestollt und gespannt.

Die fertigen Leder sind in einem tiefen neutralen Schwarzton gefärbt. Die Färbung hat eine gute Wasch-, Schweiß- und Lichtechtheit und ist außerdem migrationsecht gegen Weich-PVC.

**Beispiel 5**

Färbung nachgegerbten Leders.

Ein Lederstück von 100 Gewichtsteilen eines auf übliche Weise chromgegerbten Rindleders der Falzstärke 1,8 mm wurde zunächst in üblicher Weise mit 3 Teilen eines handelsüblichen synthetischen Gerbstoffs auf Phenolbasis und 3 Teilen Mimosaextrakt nachgegerbt. Anschließend wurde das Leder in 200 Teilen Wasser von 50 °C mit 2 Teilen des Farbstoffes gemäß Beispiel 1 durch dreißigminütiges Walken bei 50 °C gefärbt und danach in gleicher Flotte mit 6 Teilen eines handelsüblichen Fettungmittels durch einstündiges Walken gefettet. Schließlich wurde mit 2 Teilen Ameisensäure, die vor der Zugabe im Verhältnis 1 : 10 mit Wasser verdünnt worden war, abgesäuert und noch 30 Minuten gewalkt. Die nachgegerbten, gefärbten und gefetteten Leder wurden noch mit kaltem Wasser gespült und anschließend ausgereckt, hängegetrocknet, gespannt,

gestollt und gespannt.

Die fertigen Leder sind in einem tiefen Schwarzton gefärbt.

**Patentansprüche**

1. Farbstoffe der Formeln

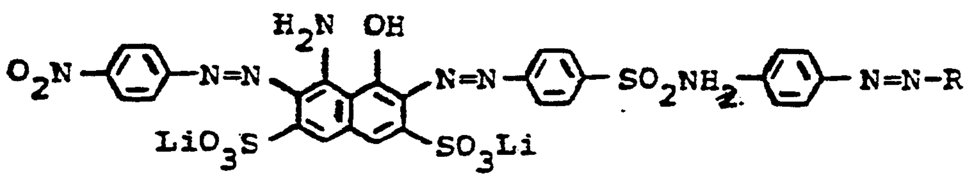

oder

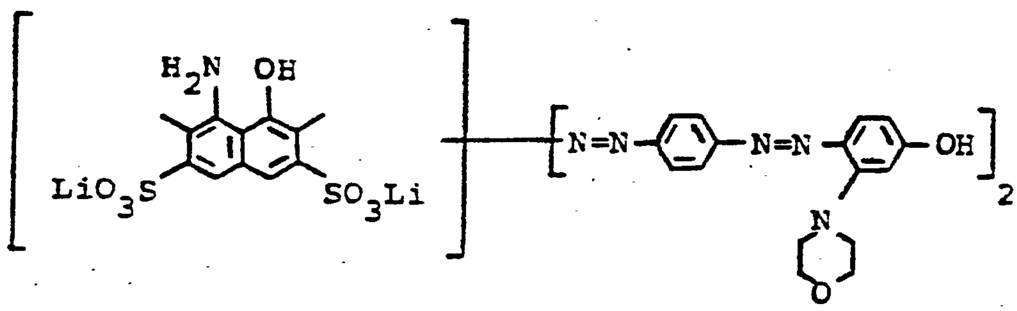

wobei

R 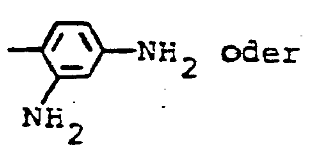 oder 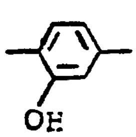 ist.

2. Verfahren zur Herstellung von Farbstoffen gemäß Anspruch 1, dadurch gekennzeichnet, daß man die wie üblich durch Diazotierung und Kupplung erhalteren Produkte mit einem Amin versetzt, anschließend den pH-Weirt auf < 3 absenkt, die ausgefallenen Farbsfoffe isoliert, salzfrei wäscht und danach in die Lithiumsalze überführt.

3. Verfahren gemäß anspruch 2, dadurch gekennzeichnet, daß man als Amine mit Wasser nicht mischbare Verbindungen verwendet.

4. Verfahren gemäß Anspruch 2, dadurch gekennzeichnet, daß man zur Überführung in die Lithiumsalze Lithiumhydroxid verwendet.

5. Verwendung der Farbstoff gemäß Anspruch 1 zum Färben von Leder oder Papier oder zur Herstellung von Schreibtinten.

**Claims**

1. A dye of the formula

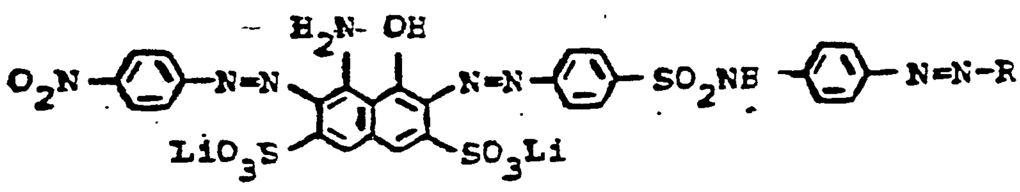

or

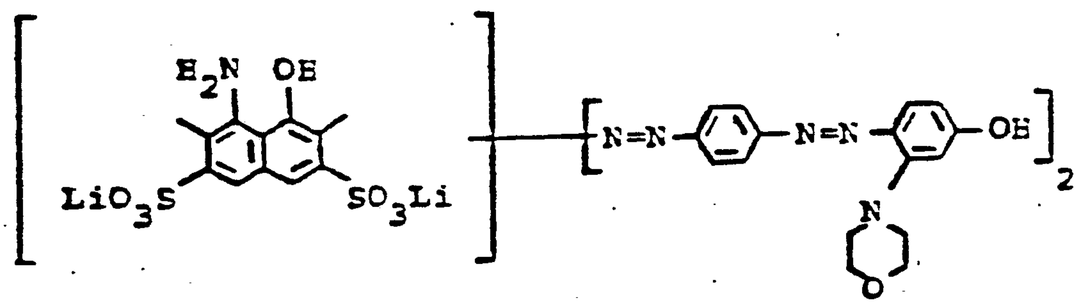

where R is

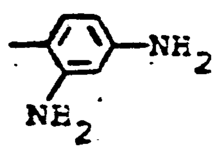

or

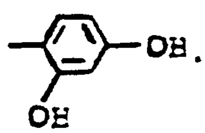

2. A process for the preparation of a dye as claimed in claim 1, wherein an amine is added to the product obtained in the usual way by diazotization and coupling, following which the pH is reduced to < 3, the precipitated dye is isolated, washed until it is salt-free, and then converted into the lithium salt.

3. A process as claimed in claim 2, wherein a compound which is not miscible with water is used as the amine.

4. A process as claimed in claim 2, wherein lithium hydroxide is used to convert the salt-free dye into the lithium salt.

5. The use of a dye as claimed in claim 1 for dyeing leather or paper or for the production of writing inks.

## Revendications

1. Colorants de formule

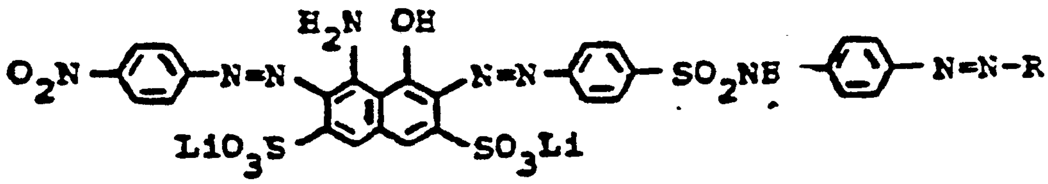

ou

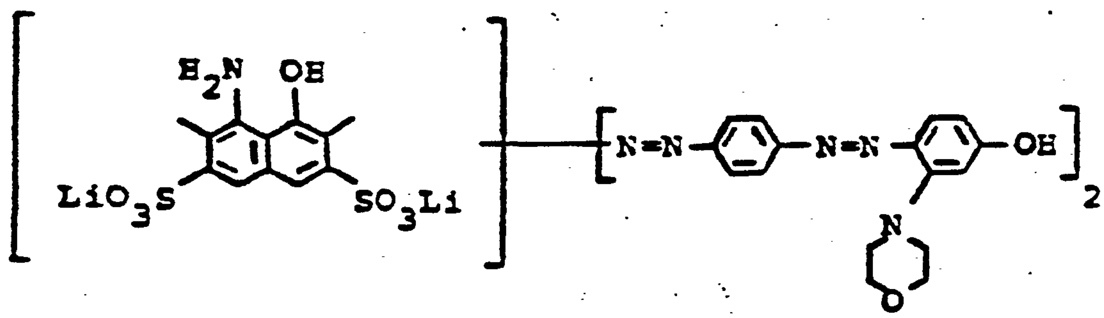

dans laquelle

R =

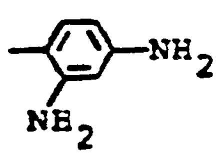

ou

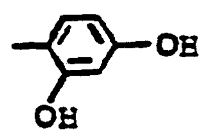

2. Procédé de préparation de colorants selon la revendication 1, caractérisé en ce qu'on mélange avec une amine les produits obtenus comme d'habitude par diazotation et copulation, puis on abaisse le pH à une valeur < 3, on isole les colorants précipités, on les lave jusqu'à l'absence de sels et on les transforme ensuite en sels de lithium.

3. Procédé selen la revendication 2, caractérisé en ce qu'on utilise, comme amines, des composés non miscibles à l'eau.

4. Procédé selen la revendication 2, caractérisé en ce qu'on utilise l'hydroxyde de lithium pour la transformation en sels de lithium.

5. Utilisation des colorants selon la revendication 1 pour la teinture de cuir ou de papier ou pour la fabrication d'encres d'écriture.